# EUROPÄISCHE PATENTANMELDUNG

(11) **EP 4 424 989 A1**
(43) Veröffentlichungstag der Anmeldung: **04.09.2024**
(21) Anmeldenummer: 23159123.1
(22) Anmeldetag: 28.02.2023
(51) Int. Cl.: F03D 17/00, F03D 80/30

(54) **VERFAHREN ZUM TESTEN EINES WINDENERGIEANLAGEN-ROTORBLATTES**

(71) Anmelder: Wobben Properties GmbH, 26607 Aurich (DE)
(72) Erfinder: Mann, Tobias, 26603 Aurich (DE); Saloga, Alexander, 26603 Aurich (DE)
(74) Vertreter: Eisenführ Speiser

(57) **Zusammenfassung**

Es wird ein Verfahren zum Testen eines Windenergieanlagen-Rotorblattes (200) vorgesehen. Das Windenergieanlagen-Rotorblatt weist eine Rotorblattwurzel (210), eine Rotorblattspitze (200) und ein elektrisch leitfähiges Blitzableitsystem (300) auf, wobei ein erstes Ende (310) des Blitzableitsystems (300) an der Rotorblattwurzel (210) und ein zweites Ende (320) im Bereich der Rotorblattspitze (220) vorgesehen ist. Eine Testspannung von mindestens einigen kV, insbesondere ≥ 10kV, wird an das erste Ende (310) und das zweite Ende (320) des Blitzableitsystems (300) angelegt. Eine elektro-magnetische Strahlung, welche durch das elektrisch leitfähige Blitzableitsystem (300) erzeugt wird, wird mittels mindestens einer Antenne (500, 510 - 530) in der Umgebung des Rotorblattes (200) erfasst oder gemessen, wenn die Testspannung angelegt ist. Die erfasste elektro-magnetische Strahlung wird ausgewertet und eine Beschädigung des Blitzableitsystems (300) basierend auf den ausgewerteten erfassten elektro-magnetischen Strahlungen wird erfasst.

## Beschreibung

Die vorliegende Erfindung betrifft ein Verfahren zum Testen eines Windenergieanlagen-Rotorblattes und eine Rotorblatt-Blitzableitsystem-Testanordnung.

Da die Rotorblätter einer Windenergieanlage den unterschiedlichsten Witterungsbedingungen ausgesetzt sind, muss eine ausreichende Qualitätskontrolle durchgeführt werden.

Es ist eine Aufgabe der vorliegenden Erfindung, ein verbessertes Verfahren zum Testen von Windenergieanlagen-Rotorblättern vorzusehen.

Diese Aufgabe wird durch ein Verfahren zum Testen eines Windenergieanlagen-Rotorblattes nach Anspruch 1 und durch eine Rotorblatt-Blitzableitsystem-Testanordnung nach Anspruch 4 gelöst.

Somit wird ein Verfahren zum Testen eines Windenergieanlagen-Rotorblattes vorgesehen. Das Windenergieanlagen-Rotorblatt weist eine Rotorblattwurzel und eine Rotorblattspitze auf. Ferner ist in oder an dem Rotorblatt ein elektrisch leitfähiges Blitzableitsystem vorgesehen, dessen erstes Ende im Bereich der Rotorblattwurzel vorgesehen ist. Ein zweites Ende des elektrisch leitfähigen Blitzschutzsystems ist im Bereich der Rotorblattspitze vorgesehen. Zum Testen des Rotorblattes wird eine Testspannung von mindestens einigen kV, insbesondere ≥ 10 kV an beide Enden des Blitzableitsystems angelegt. Hierbei werden die elektro-magnetischen Strahlungen, die durch das Blitzableitsystem erzeugt werden, mittels mindestens einer Antenne in der Umgebung des Rotorblattes erfasst. Diese elektro-magnetischen Strahlungen des Blitzableitsystems können aufgrund des Anlegens der Testspannung entstehen. Die erfassten elektro-magnetischen Strahlungen werden ausgewertet und eine Beschädigung des Blitzableitsystems wird basierend auf der ausgewerteten und erfassten elektro-magnetischen Strahlung durchgeführt.

Damit kann auf einfache und sichere Weise das Blitzableitsystem eines Windenergieanlagen-Rotorblattes auf Beschädigungen überprüft werden. Durch etwaige Beschädigungen in dem Blitzableitsystem und/oder in dem Rotorblatt kommt es bei Anlegen der Testspannung zu einer Erzeugung einer elektro-magnetischen Strahlung, welche dann durch die Antennen erfasst werden kann. Durch das Anlegen einer Testspannung von mindestens einigen kV (eine Hochspannung) an das Blitzableitsystem kann es zu Funkenüberschlägen an Schadstellen wie Rissen oder Unterbrechungen des Blitzableitsystems kommen. Die durch die Hochspannung in dem Blitzableitsystem hervorgerufenen Funkenüberschläge an Schadstellen des Blitzableitsystems erzeugen starke elektro-magnetische Felder, welche durch eine Antenne in der Umgebung des Rotorblattes erfasst werden können. Somit können auch Schadstellen des Blitzableitsystems erfasst werden, welche sehr klein sind und/oder sich im nicht zugänglichen Bereich des Rotorblattes befinden.

Eine Erfassung von mechanischen Schäden in oder an dem Blitzschutzsystem und/oder dem Rotorblatt kann durch Erfassung einer elektro-magnetischen Strahlung (nach Anlegen einer Testspannung) erfolgen.

Das Blitzableitsystem kann eine Blitzableitstrecke im Bereich der Rotorblattwurzel und der Rotorblattspitze aufweisen, über welche ein in das Rotorblatt eingeschlagener Blitz abgeleitet werden kann. Die Blitzableitstrecke kann aber auch zur kontinuierlichen elektrostatischen Entladung des Rotorblattes verwendet werden.

Gemäß einem Aspekt kann eine Mehrzahl von Antennen entlang einer Längsrichtung des Rotorblattes angeordnet sein und die elektro-magnetische Strahlung erfassen, die durch das Blitzableitsystem erzeugt wird. Die durch die Mehrzahl der Antennen erfasste elektro-magnetische Strahlung wird ortsabhängig ausgewertet, so dass eine Ortung einer Beschädigung des Blitzableitsystems durchgeführt werden kann.

Gemäß einem Aspekt der vorliegenden Erfindung kann das Rotorblatt mittels der Rotorblattwurzel in oder an einem Teststand zur mechanischen Prüfung eingespannt werden. Die mechanische Prüfung wird parallel zu der Erfassung und Auswertung der elektro-magnetischen Strahlung des Blitzableitsystems durchgeführt. Dies führt zu einem verbesserten Test, da damit auch kleinere Risse oder Beschädigungen erfasst werden können, welche nur bei einer entsprechenden mechanischen Verformung des Rotorblattes auftreten.

Das erfindungsgemäße Verfahren ist vorteilhaft, weil es zur gezielten Fehleranalyse bei Rotorblättern verwendet werden kann. Insbesondere kann das Verfahren zur gezielten Fehleranalyse bei Bestandsanlagen bzw. Bestandsrotorblättern verwendet werden. Das Rotorblatt kann dabei entweder an der Rotornabe der Windenergieanlage verbleiben oder kann am Boden getestet werden. Dazu muss lediglich eine Hochspannung an beiden Enden des Blitzableitsystems angelegt werden und die daraus resultierende elektro-magnetische Strahlung muss dabei erfasst werden. Somit kann eine exakte Bestimmung derjenigen Rotorblätter erfolgen, an denen nach Anlegen der Testspannung eine erhöhte elektro-magnetische Strahlung festgestellt wird.

Das erfindungsgemäße Testverfahren kann nach der Produktion der Rotorblätter beispielsweise dann verwendet werden, wenn ein Test der mechanischen Belastung des Rotorblattes in einem Teststand erfolgt. Alternativ dazu kann das Testverfahren auch unabhängig von einer mechanischen Prüfung in oder an einem Teststand erfolgen. Das Durchführen des Testverfahrens während einer mechanischen Prüfung ist vorteilhaft, weil damit auch Schadstellen erkannt werden können, welche nur unter bestimmten Lasten oder Verformungen des Rotorblattes auftreten bzw. sich so weit aufweiten, dass Risse entstehen.

Mit dem erfindungsgemäßen Testverfahren kann eine Fehleranalyse und eine vorzeitige Erkennung von systematischen Fehlern im Blitzableitsystem der Rotorblätter erreicht werden. Dies kann zu Kostenersparnissen bei der Reparatur der Rotorblätter führen. Des Weiteren können zukünftige Serienfehler vermieden werden und anfallende Reparaturkosten können verhindert oder reduziert werden.

Das erfindungsgemäße Testverfahren stellt ein verbessertes Testverfahren im Vergleich zum Testverfahren gemäß dem Stand der Technik dar, bei welchem eine Widerstandsmessung des Blitzableitsystems erfolgt. Eine derartige Widerstandsmessung kann kein Ergebnis dazu liefern, ob die erkannte Schadstelle ursächlich für die elektro-magnetische Funkstöraussendung ist oder nicht.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Darstellung eines Rotorblattes einer Windenergieanlage mit einer Testanordnung, und
- Fig. 3: zeigt ein Flussablaufdiagramm eines Testverfahrens.

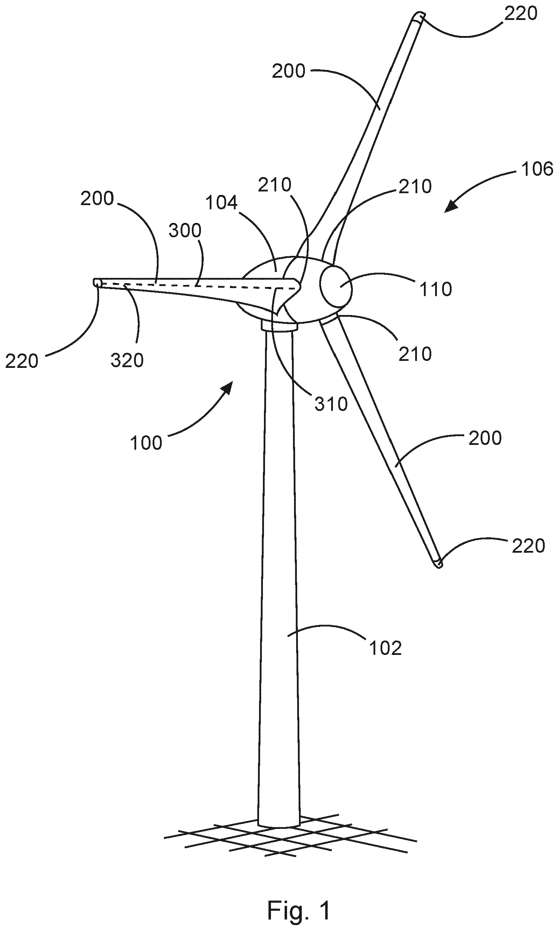

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln 210 der jeweiligen Rotorblätter 200 verändert werden. Die Rotorblätter 200 weisen eine Rotorblattwurzel 210 und eine Rotorblattspitze 220 auf. Im Bereich des Rotorblattes 200 ist jeweils ein Blitzableitsystem 300 mit einem ersten und zweiten Ende 310, 320. Das erste Ende 310 kann im Bereich der Rotorblattwurzel 210 und das zweite Ende 320 kann im Bereich der Rotorblattspitze vorgesehen sein.

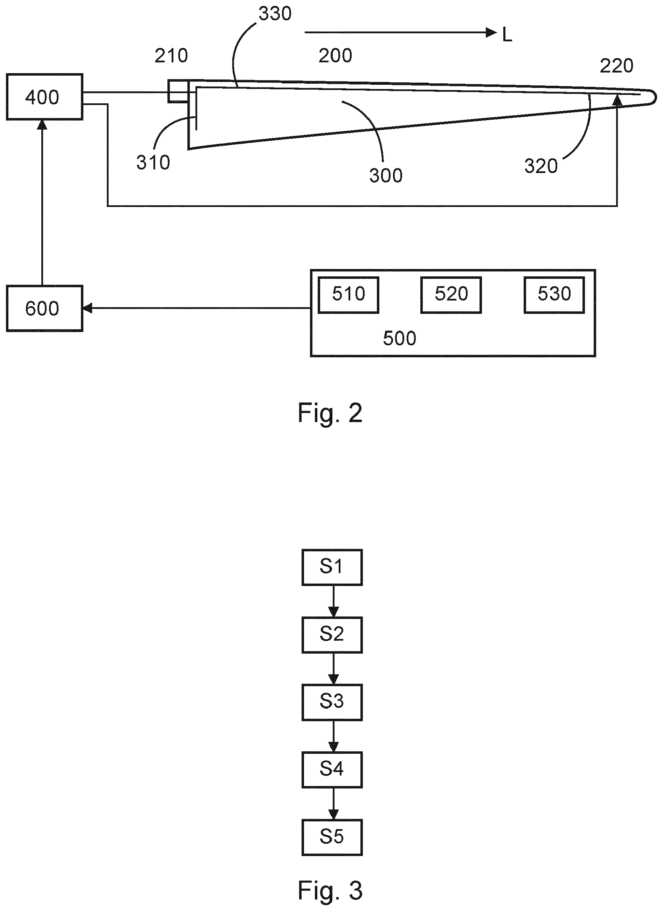

Fig. 2 zeigt eine schematische Darstellung eines Rotorblattes einer Windenergieanlage mit einer Testanordnung. Das Rotorblatt 200 weist eine Rotorblattwurzel 210 und eine Rotorblattspitze 220 auf. Im Rotorblatt ist ein elektrisch leitendes Blitzableitsystem 300 mit einem ersten Ende 310 und mindestens einem zweiten Ende 320 vorgesehen. Zwischen dem ersten und zweiten Ende 310, 320 ist eine Blitzableitstrecke 330 vorgesehen. Ein Blitz, welcher im Bereich der Rotorblattspitze 220 einschlägt, wird durch das zweite Ende 320 des Blitzableitsystems 300 über die Blitzableitstrecke 330 zu dem ersten Ende 310 des Blitzableitsystems 300 geleitet.

Des Weiteren ist ein Testaufbau mit einer Spannungsquelle 400, mindestens einer Antenne 500 und optional einem Messempfänger 600 vorgesehen. Die Spannungsquelle 400 ist an das erste Ende 310 und an das zweite Ende 320 des elektrisch leitenden Blitzableitsystems 300 gekoppelt und liefert eine Testspannung mit mindestens einigen kV. Insbesondere kann die Testspannung ≥ 10 kV betragen. Aufgrund der angelegten Testspannung erzeugt das elektrisch leitfähige Blitzableitsystem 300 ein elektro-magnetisches Feld, sofern Beschädigungen in dem Blitzableitsystem 300 vorhanden sind.

Die elektro-magnetischen Strahlungen, welche durch das Blitzableitsystem 300 erzeugt werden, werden durch die mindestens eine Antenne 510 - 530, 500 erfasst. Die erfassten elektro-magnetischen Strahlungen werden z. B. an dem Messempfänger 600 zum Auswerten ausgegeben. In dem Messempfänger 600 wird die elektro-magnetische Strahlung ausgewertet, um zu erfassen, ob Beschädigungen in dem Blitzableitsystem 300 existieren. Wenn die durch die Antennen erfassten elektro-magnetischen Strahlungen keine Auffälligkeiten aufweisen, dann kann davon ausgegangen werden, dass keine Beschädigungen in dem Blitzableitsystem 300 vorhanden sind. Die Auswertung der durch die Antennen 500 erfassten elektro-magnetischen Strahlung kann alternativ auch unabhängig von einem Messwertempfänger erfolgen.

Fig. 3 zeigt ein Flussablaufdiagramm eines Testverfahrens. Das erfindungsgemäße Testverfahren wird durchgeführt, indem in Schritt S1 eine Spannungsquelle 400 an ein erstes Ende 310 und ein zweites Ende 320 des Blitzableitsystems 300 angeschlossen wird. Anschließend wird in Schritt S2 eine Testspannung an das erste Ende 310 und das zweite Ende 320 angelegt. Diese Testspannung in Form einer Hochspannung kann dazu führen, dass es bei Beschädigungen des Blitzableitsystems 300, beispielsweise bei Rissen, dazu kommt, dass aufgrund des großen Potenzialunterschieds zwischen einer Beschädigung es zu einer elektro-magnetischen Entladung kommt, welche sich als elektro-magnetische Strahlung bemerkbar macht. In Schritt S3 werden diese elektro-magnetischen Strahlungen durch die Antennen 500 gemessen. In Schritt S4 wird die gemessene elektro-magnetische Strahlung ausgewertet und in Schritt S5 wird erfasst, ob eine Beschädigung des Blitzableitsystems vorhanden ist.

### Bezugszeichenliste

- 100: Windenergieanlage
- 102: Turm
- 104: Gondel
- 106: Rotor
- 110: Spinner
- 200: Rotorblätter
- 210: Rotorblattwurzeln
- 220: Rotorblattspitze
- 300: Blitzableitsystem
- 310: erstes Ende
- 320: zweites Ende
- 330: Blitzableitstrecke
- 400: Spannungsquelle
- 500: Antenne
- 510: Antenne
- 520: Antenne
- 530: Antenne
- 600: Messempfänger

## Patentansprüche

1. Verfahren zum Testen eines Windenergieanlagen-Rotorblattes (200), wobei das Windenergieanlagen-Rotorblatt eine Rotorblattwurzel (210), eine Rotorblattspitze (200) und ein elektrisch leitfähiges Blitzableitsystem (300) aufweist, wobei ein erstes Ende (310) des Blitzableitsystems (300) an der Rotorblattwurzel (210) und ein zweites Ende (320) im Bereich der Rotorblattspitze (220) vorgesehen ist, mit den Schritten:
Anlegen einer Testspannung von mindestens einigen kV, insbesondere ≥ 10kV, an das erste Ende (310) und das zweite Ende (320) des Blitzableitsystems (300),
Erfassen einer elektro-magnetischen Strahlung, welche durch das elektrisch leitfähige Blitzableitsystem (300) erzeugt wird, mittels mindestens einer Antenne (500, 510 - 530) in der Umgebung des Rotorblattes (200), wenn die Testspannung angelegt ist, Auswerten der erfassten elektro-magnetischen Strahlung, und
Erfassen einer Beschädigung des Blitzableitsystems (300) basierend auf den ausgewerteten erfassten elektro-magnetischen Strahlungen.

2. Verfahren nach Anspruch 1, wobei
eine Mehrzahl von Antennen (510 - 530) entlang einer Längsrichtung (L) des Rotorblattes (200) angeordnet sind und dazu ausgestaltet sind, elektro-magnetische Strahlungen zu erfassen, die durch das Blitzableitsystem (300) erzeugt werden, und
wobei die durch die Mehrzahl der Antennen (510 - 530) erfassten elektro-magnetischen Strahlungen ortsabhängig ausgewertet werden.

3. Verfahren nach einem der Ansprüche 1 bis 2, ferner mit den Schritten:
Einspannen der Rotorblattwurzel (210) in einen Teststand zur mechanischen Prüfung, und
Durchführen einer mechanischen Testung des eingespannten Rotorblattes (200) während der Erfassung und Auswertung der elektro-magnetischen Strahlung.

4. Rotorblatt-Blitzableitsystem-Testanordnung, mit
einer Spannungsquelle (400), die dazu ausgestaltet ist, eine Testspannung von mindestens einigen kV, insbesondere ≥ 10 kV, an ein Ende (310) des Blitzableitsystems (300) anzulegen,
mindestens einer Antenne (500, 510 - 530), welche dazu ausgestaltet ist, eine elektro-magnetische Strahlung des Blitzableitsystems (300) zu empfangen, und
einem Messempfänger (600), welcher dazu ausgestaltet ist, die empfangene elektro-magnetische Strahlung auszuwerten und eine Beschädigung des Blitzableitsystems (300) zu erfassen.
